# EUROPEAN PATENT APPLICATION

(11) **EP 4 661 152 A1**
(43) Date of publication of application: **10.12.2025**
(21) Application number: 24888964.4
(22) Date of filing: 17.10.2024
(51) Int. Cl.: H01M 10/42, H01M 10/48, G01B 21/32

(54) **JIG FOR SIMULATING SURFACE PRESSURE OF BATTERY CELL**

(30) Priority: 06.11.2023 KR 20230151493
(71) Applicant: LG Energy Solution, Ltd., Seoul 07335 (KR)
(72) Inventor: LEE, Subin, Daejeon 34122 (KR); SIN, Jehwan, Daejeon 34122 (KR); KWON, Wooyong, Daejeon 34122 (KR)
(74) Representative: Plasseraud IP
(86) International application number: PCT/KR2024/015741
(87) International publication number: WO 2025/100771

(57) **Abstract**

A jig for simulating a surface pressures of a battery cell including a lower plate, an upper plate spaced apart from an upper side of the lower plate, and a pressure sensor for measuring pressure on a battery cell disposed between the lower plate and the upper plate. The jig simulates the surface pressure on a battery cell within a battery module.

## Description

### TECHNICAL FIELD

The present disclosure relates to a jig for simulating the surface pressure of a battery cell, and more specifically, to a jig for simulating the surface pressure of a battery cell in a battery module.

### BACKGROUND

A secondary battery refers to a battery that can be charged and discharged, unlike a primary battery that cannot be charged, and is applied not only to portable devices but also to electric vehicles (EVs) and hybrid electric vehicles (HEVs) that are driven using an electric drive source.

Currently widely used types of secondary batteries include lithium ion batteries, lithium polymer batteries, nickel cadmium batteries, nickel hydrogen batteries, nickel zinc batteries, etc. The operating voltage of such a unit secondary battery cell, i.e., a unit battery cell, is approximately 2.5 V to 4.6 V. Therefore, when a higher output voltage is required, a battery pack is configured by connecting multiple battery cells in series. In addition, a battery pack is configured by connecting multiple battery cells in parallel depending on the charge/discharge capacity required for the battery pack. Therefore, the number of battery cells included in the battery pack can be set in various ways depending on the required output voltage or charge/discharge capacity.

When a battery pack is configured by connecting multiple battery cells in series/parallel, it is common to first configure a battery module composed of at least one battery cell, preferably multiple battery cells, and then use at least one battery module and add other components to configure the battery pack. Here, the battery module refers to a component in which multiple battery cells are connected in series or parallel, and the battery pack may refer to a component in which multiple battery modules are connected in series or parallel to increase capacity and output.

Battery cells constituting a battery module can be classified into a pouch type, a cylindrical type, and a square type depending on the shape of the battery case.

In the battery module, the surface pressure of a battery cell may vary depending on the location of the battery cell, and therefore, a device capable of simulating the behavior of the surface pressure of a battery cell in a real battery module is required.

### SUMMARY

### [TECHNICAL PROBLEMS]

An object of the present disclosure is to provide a jig capable of simulating the behavior of the surface pressure of a battery cell in a battery module.

### [TECHNICAL SOLUTION]

A jig for simulating a surface pressures of a battery cell according to an aspect of the present disclosure includes a lower plate, an upper plate disposed to be spaced apart from an upper side of the lower plate, and a pressure sensor for measuring a pressure of a battery cell disposed between the lower plate and the upper plate.

Furthermore, the jig may further include a fastening member for fastening the lower plate and the upper plate.

Furthermore, the fastening member may include a first fastening member disposed on one side of the battery cell, and a second fastening member disposed on the other side of the battery cell.

Furthermore, the first fastening member and the second fastening member may each include a bolt.

Furthermore, the first fastening member and the second fastening member may further include a nut coupled to the bolt.

Furthermore, a number of first fastening members may be different from a number of second fastening members.

Furthermore, the upper and lower plates may each include a first fastening hole into which the first fastening member is inserted, and a second fastening hole into which the second fastening member is inserted.

Furthermore, a number of first fastening holes may be different from a number of second fastening holes.

Furthermore, the jig may further include a compression pad disposed on one surface of the battery cell between the upper and lower plates.

Furthermore, the compression pad may be disposed on the lower plate.

Furthermore, the pressure sensor may be disposed on the other surface of the battery cell opposite to the one surface on which the compression pad is disposed.

Furthermore, the jig may further include two side plates disposed on both sides of the battery cell.

Furthermore, a resin layer may be disposed on at least one of the two side plates.

Furthermore, the lower plate may include two insertion grooves into which the lower portions of the two side plates are inserted.

Furthermore, the upper plate may include two insertion grooves into which the upper portions of the two side plates are inserted.

### [EFFECT]

The jig according to the present disclosure has the effect of simulating the behavior of the surface pressure of a battery cell within a battery module.

### BRIEF DESCRIPTION OF THE DRAWINGS

FIG. 1 is a perspective view of a battery module.
FIG. 2 is an exploded perspective view of the battery module.
FIG. 3 is a perspective view of a battery cell.
FIG. 4 is a front view of a jig for simulating a surface pressure of a battery cell according to an aspect of the present disclosure.
FIG. 5 is a left side view of the jig for simulating a surface pressure of a battery cell according to the aspect of the disclosure.
FIG. 6 is a plan view of a lower plate in FIG. 5.
FIG. 7 is a plan view of an upper plate in FIG. 5.
FIG. 8 is a diagram showing the surface pressure of a battery cell in the jig for simulating the surface pressure of a battery cell according to the aspect of the present disclosure.
FIG. 9 is a plan view of a lower plate in a jig for simulating the surface pressure of a battery cell according to another aspect of the present disclosure.
FIG. 10 is a plan view of an upper plate in a jig for simulating the surface pressure of a battery cell according to another aspect of the present disclosure.
FIG. 11 is a diagram showing a surface pressure of a battery cell in a jig for simulating a surface pressure of a battery cell according to another aspect of the present disclosure.

### DETAILED DESCRIPTION

The advantages and features of the present disclosure, and the methods for achieving the same will become clear with reference to the aspects described below in conjunction with the accompanying drawings. However, the present disclosure is not limited to the aspects disclosed below, but may rather be implemented in various different forms, and these aspects are provided only to make the present disclosure complete and to fully inform those skilled in the art of the scope of the disclosure, and the present disclosure is defined only by the scope of the claims. Accordingly, in some aspects, well-known process steps, well-known device structures, and well-known techniques are not specifically described in order to avoid ambiguity in the interpretation of the present disclosure. Like reference numerals refer to like elements throughout the specification.

In the drawings, the thickness may be enlarged to clearly express various layers and regions. Like reference numerals are used for similar parts throughout the specification. When a part, such as a layer, a film, a region, or a plate, is said to be "on" another part, this includes not only cases where it is "directly on" the other part, but also cases where there is another part in between. Conversely, when a part is said to be "directly on" another part, it means that there is no other part in between. Further, when a part, such as a layer, a film, a region, or a plate, is said to be "beneath" another part, this includes not only cases where it is "directly beneath" the other part, but also cases where there are other parts in between. Conversely, when a part is said to be "directly beneath" another part, it means that there are no other parts in between.

Prior to describing a jig 2000 for simulating the surface pressure of a battery cell according to one aspect of the present disclosure, a battery module 1000 will be described.

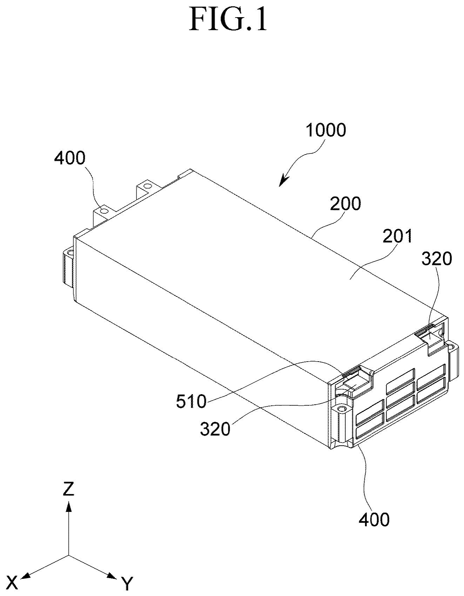

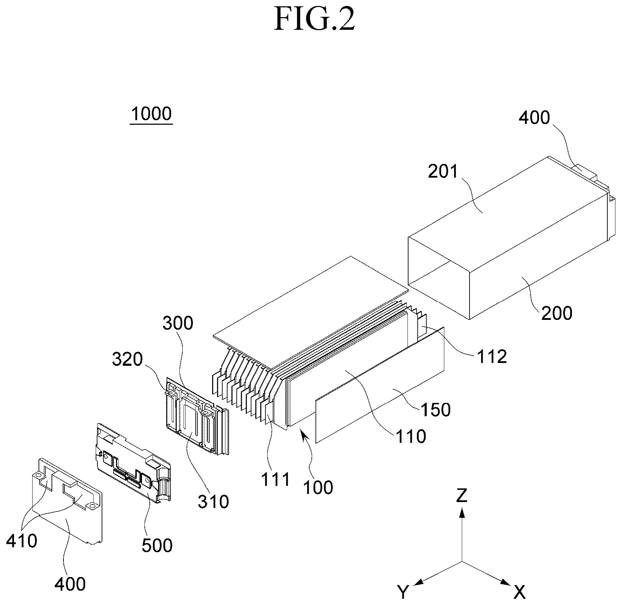

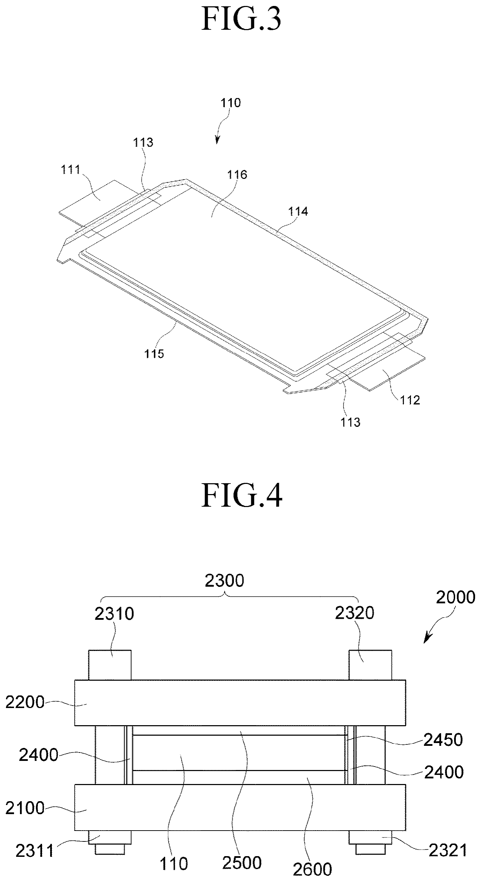

FIG. 1 is a perspective view of the battery module, FIG. 2 is an exploded perspective view of the battery module, and FIG. 3 is a perspective view of a battery cell.

The battery module 1000 may include a battery cell stack 100 in which a plurality of battery cells 110 is stacked, a module case 200 that accommodates the battery cell stack 100, a busbar frame 300 positioned on one side and/or the other side of the battery cell stack 100, an insulating cover 500 positioned on the outside of the busbar frame 300, and an end plate 400 positioned on the outside of the insulating cover 500.

The battery cell stack 100 may be formed by stacking the plurality of battery cells 110 in one direction, and the plurality of battery cells 110 may be electrically connected. The direction in which the plurality of battery cells 110 is stacked may be the X-axis direction (or -X-axis direction) in FIG. 2.

The direction from the front to the rear of the battery cell stack 100 or the opposite direction may be defined as the longitudinal direction of the battery cell stack 100 and may be the Y-axis direction in the figure. In addition, the direction from the upper surface to the lower surface of the battery cell stack 100 or the opposite direction may be defined as the width direction of the battery cell stack 100 and may be the Z-axis direction in the figure.

The longitudinal direction of the battery cell stack 100 may be substantially the same as the longitudinal direction of the battery cells 110. Electrode leads 111 and 112 of the battery cells 110 may be positioned on the front and rear sides of the battery cell stack 100, and busbars 310 and 320 of the battery module 1000 may be positioned close to the front and rear sides of the battery cell stack 100 to easily form electrical connections with the electrode leads 111 and 112.

The battery cell 110 may be provided as a pouch-type battery cell, and the number of battery cells stacked per unit area may be maximized in the case of the pouch-type battery cell. However, the battery cell 110 does not necessarily have to be provided in a pouch type, and may be provided in a square, cylindrical, or other various shapes.

The battery cell 110 provided in a pouch type may include an electrode assembly and a cell case 115 that accommodates the electrode assembly (refer to FIG. 3).

The cell case 115 of the battery cell 110 may be a pouch-type cell case 115 for accommodating the electrode assembly. The cell case 115 includes a lower case and an upper case that covers the lower case, and the upper and lower cases may be formed as one piece. In addition, as illustrated in FIG. 3, connecting portions of the upper and lower cases may be formed in a structure in which they are bent and folded. In addition, as illustrated, the upper case may completely cover the lower case, and a sealing portion 114 may be formed at the edge.

The upper and lower cases may both be formed in a laminate structure including an inner covering layer, a metal layer, and an outer covering layer. The inner covering layer is located on the inside of the cell case 115 based on the metal layer, and the inner covering layer needs to have insulation and electrolytic resistance since it is in direct contact with the electrode assembly, and in order to achieve sealing, a sealing area where the inner layers are thermally bonded is required to have excellent thermal bonding strength. The metal layer is located between the inner covering layer and the outer covering layer and corresponds to a barrier layer that prevents moisture or various gases from penetrating into the battery from the outside, and a preferable material for the metal layer in contact with the inner covering layer may be an aluminum (Al) thin film that is lightweight and has excellent formability. The outer covering layer is located on the outside of the cell case 115 based on the metal layer, and the outer covering layer can use a heat-resistant polymer that has excellent tensile strength, moisture permeability, and air permeability to protect the electrode assembly while ensuring heat resistance and chemical resistance, and for example, nylon or polyethylene terephthalate may be used for the outer covering layer.

A receiving groove 116 may be formed in the upper and lower cases, and the electrode assembly may be received in the receiving groove 116 of the upper and lower cases.

The electrode assembly accommodated in the cell case 115 may be one of a group consisting of a jelly-roll type electrode assembly having a structure in which a separator is interposed between long sheet-shaped positive and negative electrodes and then rolled up, a stack type electrode assembly composed of unit cells having a structure in which rectangular positive and negative electrodes are laminated with a separator interposed therebetween, a stack-folding type electrode assembly in which unit cells are rolled up by a long separator film, and a lamination-stack type electrode assembly in which unit cells are laminated with a separator interposed therebetween and attached to each other.

In addition, the electrode assembly may include two electrode tabs and two electrode leads 111 and 112 respectively connected to the two electrode tabs by welding.

One of the two electrode leads 111 and 112 may be a positive lead connected to a positive tab, and the other may be a negative lead connected to a negative tab.

A lead film 113 may be attached to each of the electrode leads 111 and 112. The lead film 113 coupled to the electrode leads 111 and 112 is positioned between the electrode leads 111 and 112 and the cell case 115 to prevent a short circuit from occurring between the electrode leads 111 and 112 and the cell case 115 and to improve sealing power, thereby preventing leakage of the electrolyte, and the like.

The two electrode leads 111 and 112 are illustrated as being respectively positioned on both sides of the electrode assembly, but may be positioned on only one side of the electrode assembly depending on the arrangement of the electrode tabs.

The module case 200 may be for protecting the battery cell stack 100 and electrical components connected thereto from external physical impact, and the module case 200 may accommodate the battery cell stack 100 and the electrical components connected thereto in the internal space thereof.

The module case 200 may have various structures, and for example, the module case 200 may have a mono-frame structure. Here, a mono-frame may be in the form of a metal plate in which the upper surface, the lower surface, and both side surfaces are integrated. The mono-frame may be manufactured by extrusion molding. As another example, the module case 200 may have a structure in which a U-shaped frame and an upper plate (upper surface 201) are combined. In the case of a structure in which a U-shaped frame and an upper plate are combined, the structure of the module case 200 may be formed by combining the upper plate on the upper side of the U-shaped frame, which is a metal plate in which the lower side and both sides are combined or integrated, and each frame or plate may be manufactured by press molding. In addition, the module case 200 may have an L-shaped frame structure in addition to a mono-frame or a U-shaped frame, and may be provided as in various structures not described in the above-described examples.

The structure of the module case 200 may be provided in an open form in the longitudinal direction of the battery cell stack 100. The front and rear sides of the battery cell stack 100 may not be covered by the module case 200. The electrode leads 111 and 112 of the battery cells 110 may not be covered by the module case 200. The front and rear of the battery cell stack 100 may be covered by the busbar frame 300, the end plate 400, or the busbars 310 and 320 which will be described later, and accordingly, the front and rear of the battery cell stack 100 can be protected from external physical impacts and the like.

A compression pad 150 may be positioned between the battery cell stack 100 and one side of the inner surface of the module case 200.

The compression pad 150 may be disposed to face the battery cell 110 positioned at the outermost side of the battery cell stack 100 in the X-axis direction in the figure.

Further, although not shown, a thermally conductive resin may be injected between the battery cell stack 100 and the inner surface of the module case 200, and a thermally conductive resin layer (not shown) may be formed between the battery cell stack 100 and one side of the inner surface of the module case 200 by the injected thermally conductive resin. Here, the thermally conductive resin layer may be positioned on the Z-axis of the battery cell stack 100, and the thermally conductive resin layer may be formed between the battery cell stack 100 and the bottom surface positioned on the -Z-axis of the module case 200.

The busbar frame 300 may be positioned on one side of the battery cell stack 100 and may cover one side of the battery cell stack 100 while guiding connection between the battery cell stack 100 and an external device. Specifically, the busbar frame 300 may be positioned on the front or rear of the battery cell stack 100 as illustrated, or may also be positioned on the upper surface, lower surface, or side surface. At least one of the busbars 310 and 320 and a module connector may be mounted on the busbar frame 300. As illustrated in FIG. 2, one side of the busbar frame 300 may be connected to one side or the other side of the battery cell stack 100, and the other side of the busbar frame 300 may be connected to the busbars 310 and 320.

The busbar frame 300 may include an electrically insulating material. The busbar frame 300 may restrict the busbars 310 and 320 from contacting other portions of the battery cells 110 other than the portion where the busbars are connected to the electrode leads 111 and 112, and may prevent an electrical short circuit from occurring.

The busbar frame 300 may be positioned on one side and the other side of the battery cell stack 100.

The busbars 310 and 320 may be mounted on one side of the busbar frame 300, and the busbars 310 and 320 may be for electrically connecting the battery cell stack 100 or the battery cells 110 and an external device circuit. A plurality of busbars 310 and 320 may be disposed and may be positioned between the battery cell stack 100 or the busbar frame 300 and the end plate 400, thereby protecting the battery cell stack 100 or the busbar frame 300 from external impacts and minimizing deterioration of durability due to external moisture and the like.

The busbars 310 and 320 may be electrically connected to the battery cell stack 100 through the electrode leads 111 and 112 of the battery cells 110.

Specifically, the electrode leads 111 and 112 of the battery cells 110 may be bent after passing through a lead slit formed in the busbar frame 300 and connected to the busbars 310 and 320. The electrode leads 111 and 112 of the battery cells 110 may be connected to both sides of the busbars 310 and 320, the electrode lead 111 connected to one side of each of the busbars 310 and 320 may be a positive lead, and the electrode lead 112 connected to the other side of each of the busbars 310 and 320 may be a negative lead.

The battery cells 110 constituting the battery cell stack 100 may be connected in series or in parallel by the busbars 310 and 320.

The busbars 310 and 320 may include a terminal busbar 320 for electrically connecting one battery module 1000 to another battery module 1000. At least a part of the terminal busbar 320 may be exposed to the outside of the end plate 400 to be connected to another battery module 1000, and the end plate 400 may include a terminal opening 410 for this purpose.

The end plate 400 may be intended to protect the battery cell stack 100 and the electrical components connected thereto from external physical impact by covering the open surface of the module case 200. To this end, the end plate 400 may be manufactured from a material having a predetermined strength, and for example, the end plate 400 may include a metal such as aluminum or a plastic material.

The terminal opening 410 may be formed in the end plate 400. The terminal opening 410 may be disposed on each of both sides of the end plate 400, and a part of the insulating cover 500 and one end (the second portion 322) of the terminal busbar 320 may be exposed through the terminal openings 410.

In addition, a connector opening may be positioned between the terminal openings 410 disposed on both sides of the end plate 400, and the module connector may be exposed to the outside through the connector opening.

The end plate 400 may be combined with the module case 200 while covering the busbar frame 300 or the busbars 310 and 320 located on one side of the battery cell stack 100. Each corner of the end plate 400 may be combined with the corresponding corner of the module case 200 by welding, bolt fastening, hook fastening, or the like.

The end plate 400 may be positioned on one side and the other side of the module case 200 to cover both sides of the battery cell stack 100. In the present aspect, an example in which the end plate 400 is positioned on the front and rear sides of the module case 200 is illustrated.

In addition, the insulating cover 500 for electrical insulation may be positioned between the end plate 400 and the busbar frame 300. That is, the busbar frame 300, the insulating cover 500, and the end plate 400 may be sequentially positioned from the battery cell stack 100 to the outside. Like the end plate 400, a plurality of busbar frames 300 and a plurality of insulating covers 500 may be provided.

The insulating cover 500 may include an electrical insulating material and may block the busbars 310 and 320 from contacting the end plate 400.

The insulating cover 500 may be positioned on the inner surface of the end plate 400 and may be in close contact with the inner surface of the end plate 400, but the present disclosure is not limited thereto.

Next, a jig 2000 for simulating a surface pressure of the battery cell 110 according to an aspect of the present disclosure will be described with reference to the drawings.

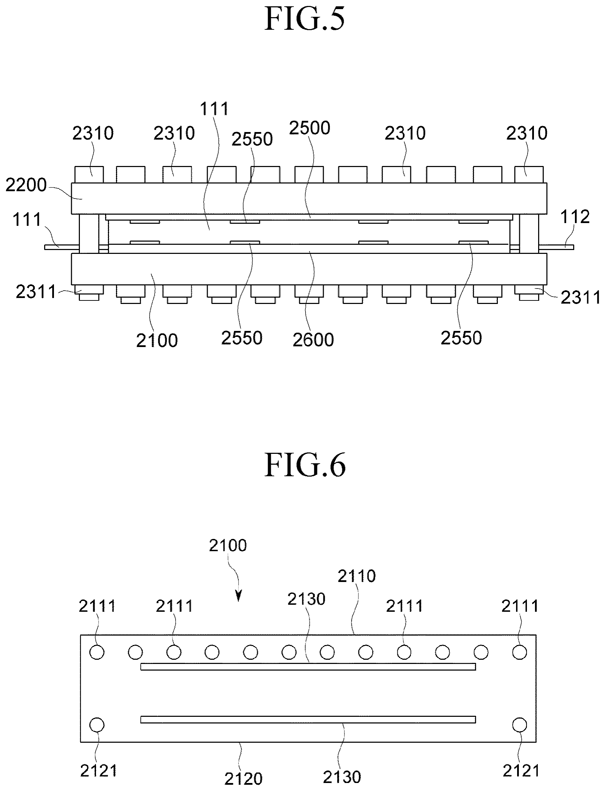

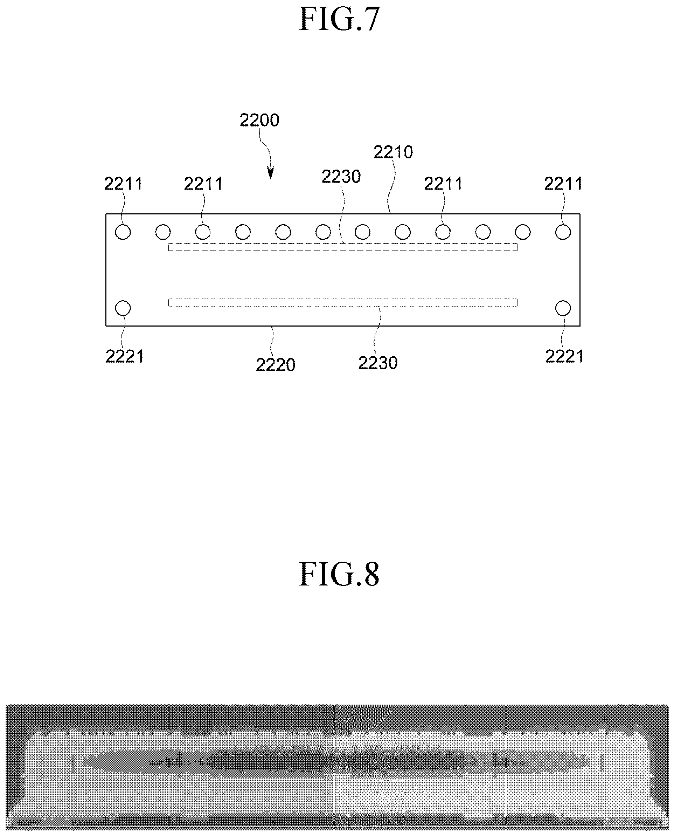

FIG. 4 is a front view of a jig for simulating a surface pressure of a battery cell according to an aspect of the present disclosure, FIG. 5 is a side view of the jig for simulating a surface pressure of a battery cell according to the aspect of the present disclosure, FIG. 6 is a plan view of a lower plate in FIG. 5, FIG. 7 is a plan view of an upper plate in FIG. 5, and FIG. 8 is a diagram illustrating a surface pressure of a battery cell obtained using the jig for simulating a surface pressure of a battery cell according to the aspect of the present disclosure.

The jig 2000 for simulating a surface pressure of a battery cell according to an aspect of the present disclosure may include a lower plate 2100, an upper plate 2200 spaced apart from and disposed above the upper side of the lower plate 2100, a fastening member 2300 for fastening the lower plate 2100 and the upper plate 2200, and a pressure sensor 2500 for measuring the pressure of the battery cell 110 disposed between the lower plate 2100 and the upper plate 2200.

The lower plate 2100 may be disposed on the lower side of the jig 2000 for simulating a surface pressure of a battery cell according to the present aspect, and may be formed in the form of a flat plate having a predetermined thickness.

FIG. 6 is a plan view of the lower plate 2100. The lower plate 2100 may be formed in a square plate shape and may include fastening holes 2111 and 2121 to which the fastening member 2300 is fastened. Specifically, the fastening holes 2111 and 2121 may include a plurality of first fastening holes 2111 disposed along a first edge 2110 of the lower plate 2100 and a plurality of second fastening holes 2121 disposed along a second edge 2120 of the lower plate 2100.

In the lower plate 2100, the first edge 2110 may extend in the longitudinal direction at the upper portion of the lower plate 2100 in FIG. 6, and the plurality of first fastening holes 2111 may be disposed to be spaced apart from each other in a row along the first edge 2110.

In the lower plate 2100, the second edge 2120 may be located on the opposite side of the first edge 2110 and may extend in the longitudinal direction at the lower portion of the lower plate 2100 in FIG. 6. The plurality of second fastening holes 2121 may be disposed to be spaced apart from each other along the second edge 2120, and in the present aspect, as illustrated, two second fastening holes 2121 may be disposed at both ends of the second edge 2120.

In the present aspect, as shown in FIG. 6, the number of first fastening holes 2111 may be greater than the number of second fastening holes 2121, and therefore, the number of first fastening members 2310 fastened to the first fastening holes 2111 at the first edge 2110 may be greater than the number of second fastening members 2320 fastened to the second fastening holes 2121 at the second edge 2120.

In FIG. 6, an example in which the number of first fastening holes 2111 is 12 and the number of second fastening holes 2121 is 2 is illustrated, but the number of first and second fastening holes 2111 and 2121 may be changed.

In addition, the lower plate 2100 may include an insertion groove 2130 into which a side plate 2400 is inserted.

As illustrated, two insertion grooves 2130 that are parallel to each other may be disposed on the upper surface of the lower plate 2100, and the two insertion grooves 2130 may be formed in a straight line along the first and second edges 2110 and 2120 and may be disposed parallel to the first and second edges 2110 and 2120.

The insertion grooves 2130 may be disposed on the inside of the first fastening holes 2111 or the second fastening holes 2121 in the lower plate 2100.

The lower plate 2100 may be made of a metal material, and may be made of aluminum (Al), for example, but is not limited thereto and may be made of other materials.

A compression pad 2600 may be disposed on the lower plate 2100.

The compression pad 2600 may be disposed between the two insertion grooves 2130 on the lower plate 2100, and therefore, the width of the compression pad 2600 may be less than the gap between the two insertion grooves 2130.

The length of the compression pad 2600 in the longitudinal direction (the left-right length of the compression pad 2600 in FIG. 5) may be similar to or greater than that of the battery cell 110.

The compression pad 2600 may be attached to the lower plate 2100.

The battery cell 110 may be placed on the compression pad 2600.

The battery cell 110 may be disposed on the compression pad 2600 such that the electrode leads 111 and 112 of the battery cell 110 are disposed on both sides of the lower plate 2100 where the insertion grooves 2130 (or the side plates 2400) are not placed.

The battery cell 110 may be a pouch-type battery cell 110 as shown in FIG. 3. That is, the upper case or the lower case constituting the case 115 of the battery cell 110 in FIG. 3 may be placed on the compression pad 2600, and one side of the battery cell 110 may be attached to the compression pad 2600 by an adhesive tape 2550. Additionally, the other side of the battery cell 110 may be attached to the pressure sensor 2500 by the adhesive tape 2550.

The pressure sensor 2500 is for measuring the pressure of the battery cell 110, and in the present aspect, the pressure sensor 2500 may be disposed between the battery cell 110 and the upper plate 2200 to measure the surface pressure of the battery cell 110. The pressure sensor 2500 may cover the entire area of the battery cell 110 excluding the electrode leads 111 and 112 on the plane, and may measure the surface pressure for the entire area of the battery cell 110 in a state in which the pressure sensor 2500 is attached to the lower surface of the upper plate 2200.

The upper plate 2100 may be placed on the upper part of the jig 2000 for simulating a surface pressure of a battery cell according to the present aspect and may be formed in a flat plate shape having a predetermined thickness.

FIG. 7 is a plan view of the upper plate 2200. The upper plate 2200 may be formed in a square plate shape and may include fastening holes 2211 and 2221 to which the fastening member 2300 is fastened. Specifically, the fastening holes 2211 and 2221 may include a plurality of first fastening holes 2211 disposed along a first edge 2210 of the upper plate 2200 and a plurality of second fastening holes 2221 disposed along a second edge 2220 of the upper plate 2200.

The first edge 2210 of the upper plate 2200 may extend in the longitudinal direction at the upper portion of the upper plate 2200 in FIG. 7, and the plurality of first fastening holes 2211 may be disposed to be spaced apart from each other in a row along the first edge 2210. In the upper plate 2200, the first fastening holes 2211 may be disposed at positions corresponding to the first fastening holes 2111 of the lower plate 2100.

In the upper plate 2200, the second edge 2220 may be positioned on the opposite side of the first edge 2210 and may extend in the longitudinal direction at the lower portion of the upper plate 2200 in FIG. 7. The plurality of second fastening holes 2221 may be disposed to be spaced apart from each other along the second edge 2220, and in the present aspect, two second fastening holes 2221 may be disposed at both ends of the second edge 2220 as illustrated. In the upper plate 2200, the second fastening holes 2221 may be disposed at positions corresponding to the second fastening holes 2121 of the lower plate 2100.

The number of first and second fastening holes 2211 and 2221 in the upper plate 2200 may be the same as the number of first and second fastening holes 2111 and 2121 in the lower plate 2100. In the present aspect, as shown in FIG. 7, the number of first fastening holes 2211 may be greater than the number of second fastening holes 2221, and therefore, the number of first fastening members 2310 fastened to the first fastening holes 2211 at the first edge 2210 may be greater than the number of second fastening members 2320 fastened to the second fastening holes 2221 at the second edge 2220.

In FIG. 7, an example in which the number of first fastening holes 2211 is 12 and the number of second fastening holes 2221 is 2 in the upper plate 2200 is illustrated, but the number of first and second fastening holes 2211 and 2221 may be changed.

In addition, the upper plate 2200 may include an insertion groove 2230 into which the side plate 2400 is inserted.

As shown, two insertion grooves 2230 that are parallel to each other may be disposed on the lower surface of the upper plate 2200 facing the lower plate 2100, and the two insertion grooves 2230 may be formed in a straight line along the first and second edges 2210 and 2220.

The insertion grooves 2230 may be disposed on the inside of the first fastening holes 2211 or the second fastening holes 2221 in the upper plate 2200.

The upper plate 2200 may be made of a metal material, and may be made of aluminum (Al) for example, but is not limited thereto and may be made of other materials.

The fastening member 2300 is for fastening the lower plate 2100 and the upper plate 2200, and may include a first fastening member 2310 and a second fastening member 2320.

The first fastening member 2310 may be inserted into the first fastening holes 2211 of the upper plate 2200 and the first fastening holes 2111 of the lower plate 2100.

The second fastening member 2320 may be inserted into the second fastening holes 2221 of the upper plate 2200 and the second fastening holes 2121 of the lower plate 2100.

In the upper and lower plates 2200 and 2100, the number of first fastening holes 2211 and 2111 may be greater than the number of second fastening holes 2221 and 2121, and therefore, the number of first fastening members 2310 may be greater than the number of second fastening members 2320.

In the present aspect, an example in which the number of first fastening members 2310 is 12 and the number of second fastening members 2320 is 2 is illustrated, but the number of first and second fastening members 2310 and 2320 may be changed.

The first and second fastening members 2310 and 2320 may be bolts, and nuts 2311 and 2321 may be coupled to the first and second fastening members 2310 and 2320, and therefore, the upper and lower plates 2200 and 2100 may be fixed. Accordingly, the first and second fastening members 2310 and 2320 may be detachably fastened to the upper and lower plates 2200 and 2100, and the upper and lower plates 2200 and 2100 may be separated by separating the first and second fastening members 2310 and 2320.

In the present aspect, as described above, the number of first fastening members 2310 may be greater than that of second fastening members 2320, and by tightening the nuts 2311 and 2321, a relatively greater pressure may be applied to one side of the battery cell 110 adjacent to the first fastening member 2310 (the left side of the battery cell 110 in FIG. 4) compared to the other side of the battery cell 110 adjacent to the second fastening member 2320 (the right side of the battery cell 110 in FIG. 4).

The side plate 2400 may be disposed between the upper and lower plates 2200 and 2100.

The side plate 2400 may be formed in a flat plate shape and disposed in a straight line along the first and second edges 2110 and 2120, similar to the insertion groove 2130, and may be disposed parallel to the first and second edges 2110 and 2120.

As shown in FIG. 4, the side plate 2400 may be disposed on each side of the battery cell 110 between the upper and lower plates 2200 and 2100.

One side plate 2400 may be disposed on the inside of the first fastening member 2310. Specifically, the lower part of the side plate 2400 may be inserted into the insertion groove 2130 (upper insertion groove 2130 in FIG. 6) located on the inside of the first fastening member 2310 in the lower plate 2100, and thus the lower part of the side plate 2400 may be located on the inside of the first fastening hole 2111 in the lower plate 2100.

The upper part of the side plate 2400 may be inserted into the insertion groove 2230 (upper insertion groove 2230 in FIG. 7) located on the inside of the first fastening member 2310 in the upper plate 2200, and thus the upper part of the side plate 2400 may be located on the inside of the first fastening hole 2211 in the upper plate 2200. The side plate 2400 located on the inside of the first fastening member 2310 may correspond to the upper part of the battery module 1000.

The other side plate 2400 may be placed on the inside of the second fastening member 2320. Specifically, the lower part of the other side plate 2400 may be inserted into the insertion groove 2130 (lower insertion groove 2130 in FIG. 6) located on the inside of the second fastening member 2320 in the lower plate 2100, and thus the lower part of the other side plate 2400 may be located on the inside of the second fastening hole 2121 in the lower plate 2100.

The upper part of the other side plate 2400 may be inserted into the insertion groove 2230 (lower insertion groove 2230 in FIG. 7) located on the inside of the second fastening member 2320 in the upper plate 2200, and thus the upper part of the other side plate 2400 may be located on the inside of the second fastening hole 2221 in the upper plate 2200. The other side plate 2400 located on the inside of the second fastening member 2320 may correspond to the lower part of the battery module 1000.

In addition, a resin layer 2450 may be provided on the inner side of the other side plate 2400 facing the battery cell 110. The resin layer 2450 may be formed by applying a thermally conductive resin to one surface of the side plate 2400. In order to improve the cooling performance of the battery module 1000, a thermally conductive resin layer may be provided on the lower surface of the module case 200, and the resin layer 2450 in the jig 2000 may correspond to this thermally conductive resin layer.

In this manner, the side plates 2400 may be detachably fixed to the upper plate 2200 and the lower plate 2100 in such a manner that the upper and lower parts thereof are inserted into the insertion grooves 2230 of the upper plate 2200 and the insertion grooves 2130 of the lower plate 2100. In addition, the side plates 2400 on which the resin layer 2450 has hardened may be replaced for the next test.

The side plates 2400 may be made of, for example, a metal material.

In the jig 2000 for simulating a surface pressure of a battery cell according to an aspect of the present disclosure, an initial pressure may be provided to the battery cell 110 through the compression pad 2600, and the initial pressure may be controlled by adjusting the gap between the upper and lower plates 2200 and 2100 through adjustment of the height of the side plates 2400 to control the compression degree of the compression pad 2600. Since the side plates 2400 support the upper and lower plates 2200 and 2100, the nuts 2311 and 2321 can be tightened with strong torque, and thus it is possible to prevent the nuts 2311 and 2321 from loosening.

In the real battery module 1000, the surface pressure of the battery cell 110 may appear differently depending on the location of the battery cell 110, and in the case of the outermost battery cell 110, the surface pressure may appear higher at the top of the battery cell 110 due to the rigidity of the module case 200 (module frame).

In the jig 2000 for simulating a surface pressure of a battery cell according to an aspect of the present disclosure, the first fastening members 2310 on the side plate 2400 (left side plate 2400 in FIG. 4) corresponding to the upper part of the battery module 1000 may be provided in greater numbers than the second fastening members 2320 to generate the surface pressure of the outermost battery cell 110.

FIG. 8 is a diagram showing the surface pressures of the battery cells 110 measured by the pressure sensor 2500 in the jig 2000 for simulating the surface pressures of battery cells according to an aspect of the present disclosure, in which dark colors (or red colors) represent areas with relatively high surface pressures and light colors (or blue colors) represent areas with relatively low surface pressures. As shown in the outermost battery cell 110, it can be seen that the surface pressure of the upper area of the battery cells 110 is higher than the surface pressure of the lower area.

Next, a jig 2000 for simulating the surface pressures of battery cells according to a second aspect of the present disclosure will be described.

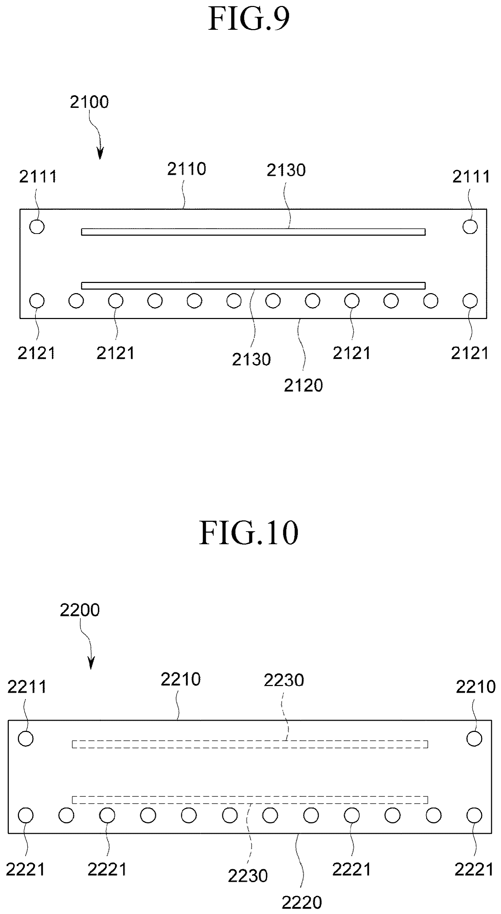

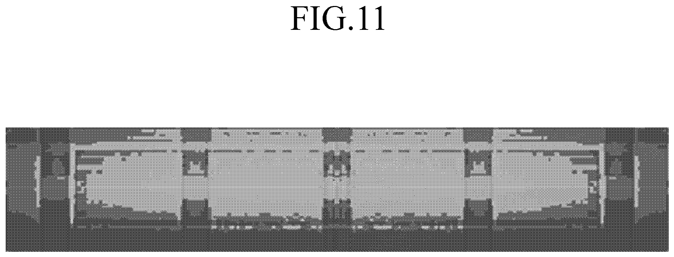

FIG. 9 is a plan view of a lower plate in a jig for simulating the surface pressures of battery cells according to another aspect of the present disclosure, FIG. 10 is a plan view of an upper plate in the jig for simulating the surface pressures of battery cells according to another aspect of the present disclosure, and FIG. 11 is a diagram showing the surface pressures of battery cells obtained using the jig for simulating the surface pressures of battery cells according to another aspect of the present disclosure.

The difference between the second aspect and the first aspect described above is that the number of the first fastening members 2310 and the second fastening members 2320 is different.

Specifically, in the second aspect, as shown in FIG. 9, the number of second fastening holes 2121 in the lower plate 2100 may be greater than the number of first fastening holes 2111, and thus the number of second fastening members 2320 fastened to the second fastening holes 2121 at the second edge 2120 may be greater than the number of first fastening members 2310 fastened to the first fastening holes 2111 at the first edge 2110.

Although an example in which the number of second fastening holes 2121 is 12 and the number of first fastening holes 2111 is 2 is illustrated in FIG. 9, the number of first and second fastening holes 2111 and 2121 may be changed.

The number of second fastening holes 2221 may be greater than the number of first fastening holes 2211 in the upper plate 2200. Although an example in which the number of second fastening holes 2221 is 12 and the number of first fastening holes 2211 is 2 in the upper plate 2200 is illustrated in FIG. 10, but the number of the first and second fastening holes 2211 and 2221 may be changed.

Therefore, in the second aspect, the number of second fastening members 2320 may be 12 and the number of first fastening members 2310 may be 2, but the number of first and second fastening members 2310 and 2320 may be changed.

In the second aspect, as described above, the number of second fastening members 2320 may be greater than the number of first fastening members 2310, and by tightening the nuts 2311 and 2321, a relatively greater pressure may be applied to one side of the battery cell 110 adjacent to the second fastening member 2320 (the right side of the battery cell 110 in FIG. 4) compared to the other side of the battery cell 110 adjacent to the first fastening member 2310 (the left side of the battery cell 110 in FIG. 4).

In the real battery module 1000, the surface pressure at the lower area of the battery cells 110 may be higher due to the influence of the resin at the center.

In the second aspect, the second fastening members 2320 on the side plate 2400 (right side plate 2400 in FIG. 4) corresponding to the lower part of the battery module 1000 may be provided in greater numbers than the first fastening members 2310 to generate the surface pressure of the central battery cell 110.

FIG. 11 is a diagram showing the surface pressures of the battery cells 110 measured using the pressure sensor 2500 in the second aspect, and it can be seen that the surface pressure at the lower part of the battery cell 110 is higher than the surface pressure at the upper part, as shown in the central battery cell 110.

As described above, the surface pressure of the battery cell 110 in the real battery module 1000 may vary depending on the location of the battery cell 110, and the jig 2000 according to the aspects of the present disclosure can generate an asymmetric surface pressure distribution in the vertical direction and can realize the surface pressure distribution of the outermost battery cell and the surface pressure distribution of the central battery cell.

In addition, the second aspect can be implemented by rotating or flipping the jig 2000 or the upper and lower plates 2100 and 2200 in the first aspect 180 degrees, and thus the jig 2000 for simulating the surface pressures of battery cells according to a preferred aspect of the present disclosure has the advantage of being able to simulate the surface pressure of the outermost battery cell 110 and the central battery cell 110 in a simple manner.

The present disclosure has been described with reference to preferred aspects as described above, but is not limited to the above aspects, and various changes and modifications may be made by those skilled in the art within the scope that does not depart from the spirit of the present disclosure.

### [INDUSTRIAL APPLICABILITY]

The present disclosure can provide a jig capable of simulating the behavior of battery cell pressures within a battery module.

## Claims

1. A jig for simulating surface pressures of a battery cell, including:
a lower plate;
an upper plate configured to be spaced apart from an upper side of the lower plate; and
a pressure sensor for measuring pressure on a battery cell disposed between the lower plate and the upper plate.

2. The jig of claim 1, further comprising at least one fastening member for fastening the lower plate and the upper plate.

3. The jig of claim 1, wherein the at least one fastening member includes at least one first fastening member configured to be disposed on one side of the battery cell, and at least one second fastening member configured to be disposed on the other side of the battery cell.

4. The jig of claim 3, wherein the first fastening member and the second fastening member each include a bolt.

5. The jig of claim 4, wherein the first fastening member and the second fastening member further include a nut coupled to the bolt.

6. The jig of claim 3, wherein a number of first fastening members is different from a number of second fastening members.

7. The jig of claim 3, wherein the upper and lower plates each include at least one first fastening hole into which the at least one first fastening member is inserted, and at least one second fastening hole into which the at least one second fastening member is inserted.

8. The jig of claim 7, wherein a number of first fastening holes is different from a number of second fastening holes.

9. The jig of claim 1, further comprising a compression pad disposed on a surface of the battery cell between the upper and lower plates.

10. The jig of claim 9, wherein the compression pad is disposed on the lower plate.

11. The jig of claim 9, wherein the pressure sensor is disposed on another surface of the battery cell opposing the surface of the battery cell on which the compression pad is disposed.

12. The jig of claim 1, further comprising two side plates disposed on two sides of the battery cell.

13. The jig of claim 1, wherein a resin layer is disposed on at least one of the two side plates.

14. The jig of claim 1, wherein the lower plate includes two insertion grooves into which lower portions of the two side plates are inserted.

15. The jig of claim 14, wherein the upper plate includes two insertion grooves into which upper portions of the two side plates are inserted.
